# EUROPÄISCHE PATENTSCHRIFT

(11) **EP 2 741 397 B1**
(45) Veröffentlichungstag und Bekanntmachung des Hinweises auf die Patenterteilung: **11.02.2015**
(21) Anmeldenummer: 12195465.5
(22) Anmeldetag: 04.12.2012
(51) Int. Cl.: H02K 1/20, H02K 9/10, H02K 9/19

(54) **Elektrische Maschine mit kombinierter Luft-Wasser-Kühlung**
Electric machine with combined air-water cooling
Machine électrique avec refroidissement eau-air combiné

(43) Veröffentlichungstag der Anmeldung: 11.06.2014
(73) Patentinhaber: Siemens Aktiengesellschaft, 80333 München (DE)
(72) Erfinder: Noack, Felix, 90427 Nürnberg (DE); Sindelka, Martin, 90478 Nürnberg (DE); Weiß, Sebastian, 90522 Oberasbach (DE)

(56) Entgegenhaltungen:
- EP-A1- 2 518 868
- EP-A2- 0 623 988
- EP-A2- 1 248 349
- EP-A2- 2 109 207
- WO-A1-98/54819
- WO-A2-2012/159660
- DE-A1- 19 716 758
- DE-U- 1 813 190
- US-A1- 2008 030 086

## Beschreibung

Die vorliegende Erfindung betrifft eine elektrische Maschine,
- wobei die elektrische Maschine ein Gehäuse aufweist, in dem ein Stator angeordnet ist und in dem ein Rotor um eine Rotationsachse drehbar gelagert ist,
- wobei das Gehäuse sich in Richtung der Rotationsachse gesehen von einem vorderen Ende zu einem hinteren Ende erstreckt,
- wobei das Gehäuse entweder in der Nähe des vorderen Endes eine Lufteintrittsöffnung und in der Nähe des hinteren Endes eine Luftaustrittsöffnung oder in der Nähe des vorderen Endes und des hinteren Endes jeweils eine Lufteintrittsöffnung und dazwischen an einer zur Rotationsachse parallelen Seite eine Luftaustrittsöffnung aufweist,
- wobei die elektrische Maschine im Betrieb an den Lufteintrittsöffnungen Luft ansaugt und die angesaugte Luft an der Luftaustrittsöffnung ausstößt,
- wobei an die zur Rotationsachse parallele Seite des Gehäuses ein Aufsatz aufgesetzt ist, der die Lufteintrittsöffnungen und die Luftaustrittsöffnung haubenartig überdeckt, so dass die an der Luftaustrittsöffnung aus dem Gehäuse ausgestoßene Luft wieder den Lufteintrittsöffnungen zugeführt wird.

Derartige elektrische Maschinen sind allgemein bekannt. Rein beispielhaft wird auf die DE 37 24 186 A1 verwiesen.

Das Dokument US2008/0300086 offenbart eine elektrische Maschine mit einem Kühlsystem.

Bei elektrischen Maschinen der eingangs genannten Art sind üblicherweise im Aufsatz Rohre angeordnet, die von einem gasförmigen oder flüssigen Kühlmedium - in der Regel Luft oder Wasser - durchströmt werden und dadurch der die elektrische Maschine kühlenden Luft Wärme entziehen. Aufgrund des für die Rohre erforderlichen Bauraums ist für den Aufsatz in der Regel eine erhebliche Bauhöhe erforderlich. Weiterhin ist die Kühlung der elektrischen Maschine zwar effizient, aber nicht optimal.

Die Aufgabe der vorliegenden Erfindung besteht darin, eine elektrische Maschine der eingangs genannten Art derart weiterzuentwickeln, dass die Kühlung optimiert wird und die elektrische Maschine kompakter baut.

Die Aufgabe wird durch eine elektrische Maschine mit den Merkmalen des Anspruchs 1 gelöst. Vorteilhafte Ausgestaltungen der erfindungsgemäßen elektrischen Maschine sind Gegenstand der abhängigen Ansprüche 2 bis 10.

Erfindungsgemäß wird eine elektrische Maschine der eingangs genannten Art dadurch ausgestaltet,
- dass im Stator Rohre für ein flüssiges Kühlmedium angeordnet sind, mittels dessen der Stator im Betrieb direkt gekühlt wird, und
- dass zumindest einige der Rohre in Richtung der Rotationsachse gesehen über den Stator in Richtung auf das vordere und das hintere Ende zu hinausragen, so dass sie im Betrieb der angesaugten, innerhalb des Gehäuses strömenden Luft Wärme entziehen.

Durch diese Vorgehensweise kann der Stator direkt mit dem flüssigen Kühlmedium hocheffizient gekühlt werden. Die Kühlung des Rotors ist mindestens ebenso effizient wie im Stand der Technik. Weiterhin kann die erfindungsgemäße elektrische Maschine kompakt gebaut werden.

Im Stator ist ein Statorwicklungssystem angeordnet, das vom Stator aus in Richtung der Rotationsachse gesehen auf das vordere Ende zu einen vorderen Wicklungskopf und auf das hintere Ende zu einen hinteren Wicklungskopf aufweist. In einer bevorzugten Ausgestaltung der vorliegenden Erfindung überdecken die Rohre in Richtung der Rotationsachse gesehen mindestens 50 %, besser mindestens 75 %, der Wicklungsköpfe. In der Regel erstrecken sich die Rohre nicht vollständig über die Wicklungsköpfe. In Einzelfällen ist jedoch auch eine vollständige Erstreckung über die Wicklungsköpfe oder sogar über die Wicklungsköpfe hinaus möglich.

In der Regel sind die Rohre um die Rotationsachse herum gesehen gleichmäßig verteilt angeordnet. Es ist möglich, dass die Rohre gleich weit über den Stator auf das vordere Ende zu und das hintere Ende zu hinausragen, dass also alle Rohre unabhängig davon, an welcher Stelle des Umfangs des Stators sie angeordnet sind, gleich lang sind. Alternativ ist es möglich, dass zumindest die im vom Aufsatz abgewandten Bereich der elektrischen Maschine angeordneten Rohre weniger weit über den Stator auf das vordere Ende zu und das hintere Ende zu hinausragen als die im dem Aufsatz zugewandten Bereich der elektrischen Maschine angeordneten Rohre.

In der Regel werden die Rohre in denjenigen Bereichen, in denen sie über den Stator auf das vordere Ende zu und das hintere Ende zu hinausragen, von der angesaugten, innerhalb des Gehäuses strömenden Luft umströmt. In diesem Fall sind vorzugsweise an den Rohren in denjenigen Bereichen, in denen sie über den Stator auf das vordere Ende zu und das hintere Ende zu hinausragen, von den Rohren abstehende Kühlrippen angeordnet.

Weiterhin ist es möglich, dass an den Rohren Kühlkörper angeordnet sind, die sich in Richtung der Rotationsachse gesehen über die Rohre hinaus zu den Enden des Gehäuses hin erstrecken. Diese Ausgestaltung ist unabhängig davon realisierbar, ob die Rohre selbst von der angesaugten, innerhalb des Gehäuses strömenden Luft umströmt werden oder nicht und ob an den Rohren Kühlrippen angeordnet sind.

Weiterhin ist es möglich, dass die Rohre an ihren axialen Enden über eine jeweilige Ringsammelleitung miteinander verbunden sind. In diesem Fall können an den Ringsammelleitungen Kühlkörper angeordnet sein, die sich in Richtung der Rotationsachse gesehen über die Ringsammelleitungen hinaus zu den Enden des Gehäuses hin erstrecken.

In einer besonders bevorzugten Ausgestaltung der elektrischen Maschine ist vorgesehen,
- dass der Rotor mindestens einen sich in Richtung der Rotationsachse erstreckenden Längskühlluftkanal aufweist, von dem in Richtung der Rotationsachse gesehen an vorbestimmten Axialpositionen sich radial zur Rotationsachse erstreckende rotorseitige Querkühlluftkanäle nach radial außen abzweigen,
- dass der Stator in Richtung der Rotationsachse zwischen den vorbestimmten Axialpositionen gesehen jeweils einen Statorabschnitt und an den vorbestimmten Axialpositionen sich radial zur Rotationsachse erstreckende statorseitige Querkühlluftkanäle aufweist und
- dass die im Betrieb an den Lufteintrittsöffnungen angesaugte Luft innerhalb des Gehäuses zumindest teilweise in Richtung der Rotationsachse in den mindestens einen Längskühlluftkanal einströmt und sodann durch die rotorseitigen Querkühlluftkanäle und die statorseitigen Querkühlluftkanäle nach radial außen strömt.

Durch diese Ausgestaltung kann insbesondere die Kühlwirkung optimiert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1 und 2: Ausführungsformen einer elektrischen Maschine im Längsschnitt und
- FIG 3: einen Stator im Querschnitt.

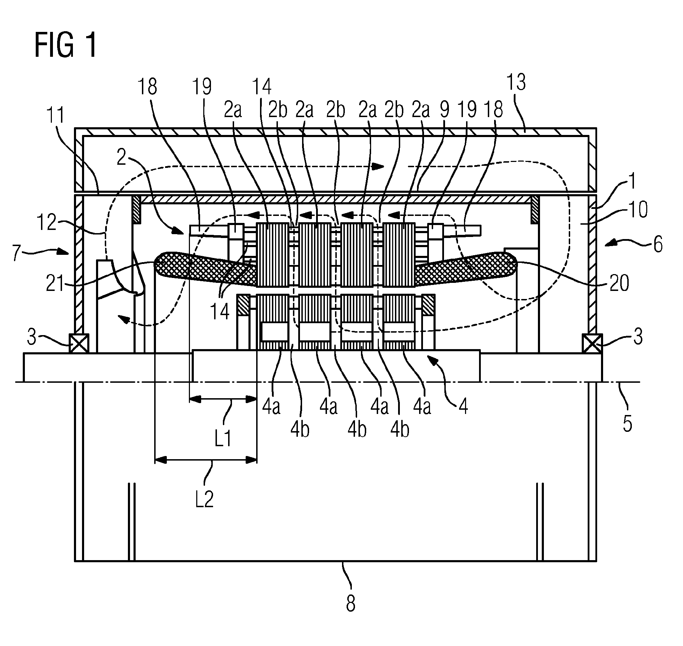

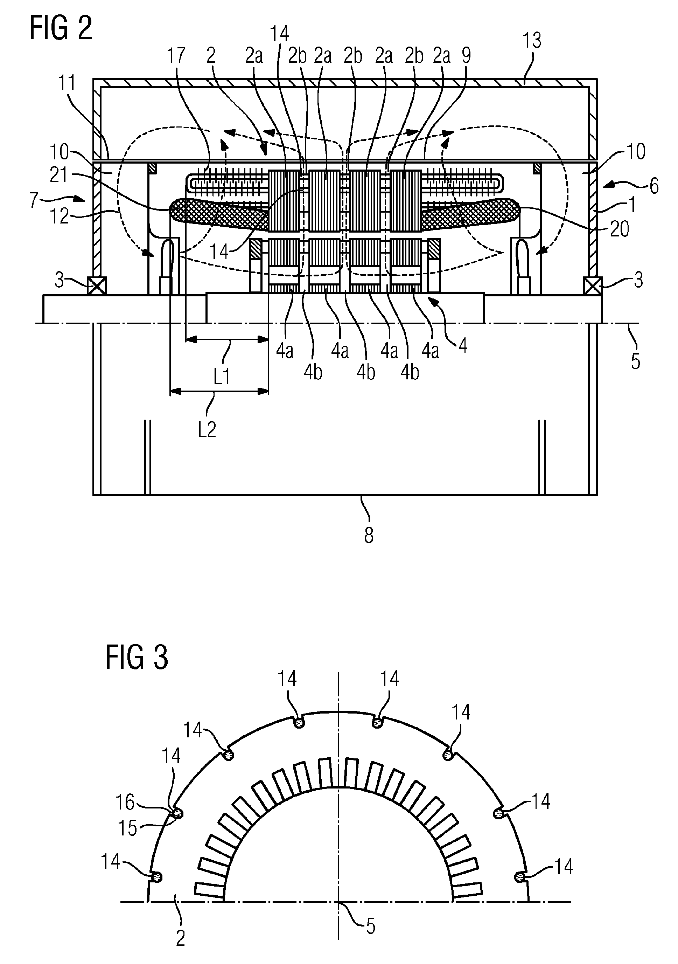

Gemäß den FIG 1 und 2 weist eine elektrische Maschine ein Gehäuse 1 auf. In dem Gehäuse 1 ist ein Stator 2 angeordnet. In dem Gehäuse 1 ist weiterhin in Lagern 3 ein Rotor 4 gelagert, so dass der Rotor 4 um eine Rotationsachse 5 drehbar gelagert ist. In Richtung der Rotationsachse 5 gesehen erstreckt sich das Gehäuse von einem vorderen Ende 6 zu einem hinteren Ende 7. Es steht mit einer Unterseite 8 auf einem (nicht dargestellten) Fundament auf.

Die Rotationsachse verläuft in der Regel horizontal. Auf diese Ausgestaltungen beziehen sich die nachstehenden Ausführungen. Im Einzelfall könnte die Rotationsachse jedoch alternativ vertikal verlaufen.

Vorzugsweise weist der Rotor mindestens einen Längskühlluftkanal 4a auf. Der Längskühlluftkanal 4a erstreckt sich in Richtung der Rotationsachse 5. An vorbestimmten Axialpositionen - also an in Richtung der Rotationsachse 5 gesehen vorbestimmten Positionen - zweigen von dem (mindestens einen) Längskühlluftkanal 4a rotorseitige Querkühlluftkanäle 4b nach radial außen ab. Die Querkühlluftkanäle 4b erstrecken sich radial zur Rotationsachse 5. Sie sind nach radial außen hin, d.h. zum Stator 2 hin, offen. Weiterhin weist der Stator 2 an den vorbestimmten Axialpositionen statorseitige Querkühlluftkanäle 2b auf. Die statorseitigen Querkühlluftkanäle 2b erstrecken sich radial zur Rotationsachse 5. Zwischen den vorbestimmten Axialpositionen weist der Stator 2 jeweils einen Statorabschnitt 2a auf.

Es ist möglich, dass das Gehäuse 1 eine (einzige) Lufteintrittsöffnung 10 und eine Luftaustrittsöffnung 11 aufweist. In diesem Fall ist die Lufteintrittsöffnungen 10 in der Nähe des vorderen Endes 6 angeordnet, die Luftaustrittsöffnung 11 in der Nähe des hinteren Endes 7. Meist sind die Lufteintrittsöffnung 10 und die Luftaustrittsöffnung 11 in diesem Fall auf einer Oberseite 9 (bzw. allgemein auf einer zur Rotationsachse 5 parallelen Seite 9) des Gehäuses 1 angeordnet. In Einzelfällen können sie jedoch an den Stirnseiten des Gehäuses 1 angeordnet sein. Diese Ausgestaltung ist in FIG 1 dargestellt. Alternativ ist es möglich, dass das Gehäuse 1 auf der Oberseite 9 zwei Lufteintrittsöffnungen 10 und eine Luftaustrittsöffnung 11 aufweist. In diesem Fall ist je eine der Lufteintrittsöffnungen 10 in der Nähe des vorderen Endes 6 und des hinteren Endes 7 angeordnet. Die Luftaustrittsöffnung 11 ist in diesem Fall zwischen den beiden Lufteintrittsöffnungen 10 angeordnet. Diese Ausgestaltung ist in FIG 2 dargestellt. Meist sind auch in diesem Fall die Lufteintrittsöffnungen 10 auf der Oberseite 9 bzw. der zur Rotationsachse 5 parallelen Seite 9 angeordnet. In Einzelfällen können sie jedoch an den Stirnseiten des Gehäuses 1 angeordnet sein. Die Luftaustrittsöffnung 11 ist stets auf der Oberseite 9 bzw. der zur Rotationsachse 5 parallelen Seite 9 angeordnet.

Nachfolgend wird stets der Begriff Lufteintrittsöffnungen 10 (im Plural) verwendet. Die Verwendung erfolgt jedoch lediglich in generischem Sinne. Die entsprechenden Ausführungen sind also gleichermaßen für die Ausgestaltung gemäß FIG 1 mit einer einzigen Lufteintrittsöffnung 10 gültig.

Unabhängig davon, welche der beiden Ausgestaltungen (mit einer einzigen Lufteintrittsöffnung 10 oder mit zwei Lufteintrittsöffnungen 10) realisiert ist, saugt die elektrische Maschine im Betrieb der elektrischen Maschine an den Lufteintrittsöffnungen 10 Luft an, leitet sie durch das Gehäuse 1 (insbesondere durch den Stator 2 und den Rotor 4) und stößt die Luft an der Luftaustrittsöffnung 11 wieder aus. Die jeweiligen Luftkreisläufe sind in den FIG 1 und 2 in gestrichelten Linien 12 dargestellt. Aus den Darstellungen in den FIG 1 und 2 ist insbesondere ersichtlich, dass die im Betrieb der elektrischen Maschine an den Lufteintrittsöffnungen 10 angesaugte Luft innerhalb des Gehäuses 1 (zumindest teilweise) in Richtung der Rotationsachse 5 in den mindestens einen Längskühlluftkanal 4a einströmt und sodann durch die rotorseitigen Querkühlluftkanäle 4b und die statorseitigen Querkühlluftkanäle 2b nach radial außen strömt.

Auf die Oberseite 9 bzw. die zur Rotationsachse 5 parallele Seite 9 des Gehäuses 1 ist weiterhin ein Aufsatz 13 aufgesetzt. Der Aufsatz 13 überdeckt die Lufteintrittsöffnungen 10 und die Luftaustrittsöffnung 11 haubenartig. Aufgrund des Aufsatzes 13 wird Luft, die an der Luftaustrittsöffnung 11 ausgestoßen wird, wieder den Lufteintrittsöffnungen 10 zugeführt. Die Luft zirkuliert also in einem geschlossenen Kühlkreislauf. Sie kühlt den Rotor 4 und teilweise auch den Stator 2 durch Konvektion.

Im Stator 2 sind - dies gilt sowohl für die Ausgestaltung gemäß FIG 1 als auch für die Ausgestaltung gemäß FIG 2 - Rohre 14 angeordnet. Die Rohre 14 verlaufen gemäß den FIG 1 und 2 und auch gemäß FIG 3 in Richtung der Rotationsachse 5. Alternativ könnten sie einen leichten Drall um die Rotationsachse 5 aufweisen. Die Rohre 14 führen ein flüssiges Kühlmedium 15, üblicherweise Wasser. Mittels des flüssigen Kühlmediums 15 wird der Stator 1 im Betrieb der elektrischen Maschine direkt gekühlt, also direkt flüssigkeitsgekühlt. Die Wärmeübertragung vom Stator 2 auf die Rohre 14 erfolgt durch Wärmeleitung. Die Rohre 14 können gemäß FIG 3 beispielsweise am Au-ßenumfang des Stators 1 in Nuten 16 eingepresst sein. Alternativ oder zusätzlich können die Rohre 14 in Bohrungen eingebracht sein.

Gemäß den FIG 1 und 2 ragen die Rohre 14 - zumindest einige der Rohre 14 - in Richtung der Rotationsachse 5 gesehen über den Stator 2 in Richtung auf das vordere Ende 6 und das hintere Ende 7 zu hinaus. Dadurch ist es möglich, dass die Rohre 14 im Betrieb der elektrischen Maschine der durch die Lufteintrittsöffnungen 10 angesaugten, innerhalb des Gehäuses 1 strömenden Luft Wärme entziehen.

Im einfachsten Fall erfolgt zu diesem Zweck die Führung der innerhalb des Gehäuses 1 strömenden Luft derart, dass die Luft die Rohre 14 in denjenigen Bereichen, in denen die Rohre 14 über den Stator 2 auf das vordere Ende 6 zu und das hintere Ende 7 zu hinausragen, umströmt. Insbesondere in diesem Fall können an den Rohren 14 in denjenigen Bereichen, in denen sie über den Stator 2 auf das vordere Ende 6 zu und das hintere Ende 7 zu hinausragen, Kühlrippen 10 angeordnet sein, die von den Rohren 14 abstehen. Die Kühlrippen 17 können beispielsweise auf die Rohre 14 aufgeklemmt sein.

Alternativ oder zusätzlich zu einem direkten Umströmen der Rohre 14 durch die innerhalb des Gehäuses 1 strömende Luft können an den Rohren 14 Kühlkörper 18 angeordnet sein. Die Kühlkörper 18 erstrecken sich in diesem Fall in Richtung der Rotationsachse 5 gesehen über die Rohre 14 hinaus zu den Enden 6, 7 des Gehäuses hin.

Es ist möglich, dass die Rohre 14 entsprechend der Darstellung in FIG 1 U-förmige Abschnitte aufweisen, so dass das Kühlmedium 15 in einem ersten Teil der Rohre 14 in Richtung vom vorderen Ende 6 auf das hintere Ende 7 zu und in einem zweiten Teil der Rohre 14 in Richtung vom hinteren Ende 7 auf das vordere Ende 6 zu strömt. Alternativ ist es entsprechend der Darstellung in FIG 2 möglich, dass die Rohre 14 auf beiden Seiten des Stators 2 - also an ihren axialen Enden - mittels einer jeweiligen Ringsammelleitung 19 verbunden sind. Falls in diesem Fall die Kühlkörper 18 vorhanden sind, sind sie gemäß FIG 2 an den Ringsammelleitungen 19 angeordnet.

Im Stator 2 ist ein Statorwicklungssystem angeordnet. Das Statorwicklungssystem als solches ist in den FIG 1 und 2 nicht sichtbar, da es vom Stator 2 verdeckt ist. Das Statorwicklungssystem weist einen vorderen Wicklungskopf 20 und einen hinteren Wicklungskopf 21 auf. Die Wicklungsköpfe 20, 21 sind in den FIG 1 und 2 dargestellt. Der vordere Wicklungskopf 20 erstreckt sich vom Stator 2 aus in Richtung der Rotationsachse 5 gesehen auf das vordere Ende 6 zu. In analoger Weise erstreckt sich der hintere Wicklungskopf 21 vom Stator 2 aus in Richtung der Rotationsachse 5 gesehen auf das hintere Ende 7 zu. Gemäß den FIG 1 und 2 überdecken die Rohre 14 in Richtung der Rotationsachse 5 gesehen mindestens 50 % der Wicklungsköpfe 20, 21. Vorzugsweise überdecken sie sogar mindestens 75 % der Wicklungsköpfe 20, 21. Der Überdeckungsgrad bezieht sich auf das Verhältnis der axialen Länge L1 des Überstandes der Rohre 14 über den Stator 2 zum Überstand L2 der Wicklungsköpfe 20, 21 über den Stator 2.

In der Regel überdecken die Rohre 14 in Richtung der Rotationsachse 5 gesehen die Wicklungsköpfe 20, 21 nicht vollständig. In Einzelfällen kann jedoch auch eine vollständige Überdeckung oder sogar ein Überragen der Wicklungsköpfe 20, 21 möglich sein.

Die Rohre 14 sind gemäß FIG 3 um die Rotationsachse 5 herum gesehen vorzugsweise gleichmäßig verteilt angeordnet. Es ist möglich, dass die Rohre 14 gleich weit über den Stator 2 auf das vordere Ende 6 zu und das hintere Ende 7 zu hinausragen. Diese Ausgestaltung ist insbesondere dann von Vorteil, wenn die Enden der Rohre 14 mittels der Ringsammelleitungen 19 verbunden sind. Alternativ ist es möglich, dass zumindest die im unteren Bereich bzw. allgemein im vom Aufsatz 13 abgewandten Bereich der elektrischen Maschine angeordneten Rohre 14 weniger weit über den Stator 2 auf das vordere Ende 6 zu und das hintere Ende 7 zu hinausragen als die im oberen Bereich bzw. allgemein im dem Aufsatz 13 zugewandten Bereich der elektrischen Maschine angeordneten Rohre 14.

Die vorliegende Erfindung weist viele Vorteile auf. Insbesondere ist auf einfache Weise eine kompakte kombinierte Wasser-Luft-Kühlung einer elektrischen Maschine realisierbar. Auch sind Leistungssteigerungen möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine ein Gehäuse (1) aufweist, in dem ein Stator (2) angeordnet ist und in dem ein Rotor (4) um eine Rotationsachse (5) drehbar gelagert ist,
- wobei das Gehäuse (1) sich in Richtung der Rotationsachse (5) gesehen von einem vorderen Ende (6) zu einem hinteren Ende (7) erstreckt,
- wobei das Gehäuse (1) entweder in der Nähe des vorderen Endes (6) eine Lufteintrittsöffnung (10) und in der Nähe des hinteren Endes (7) eine Luftaustrittsöffnung (11) oder in der Nähe des vorderen Endes (6) und des hinteren Endes (7) jeweils eine Lufteintrittsöffnung (10) und dazwischen an einer zur Rotationsachse (5) parallelen Seite (9) eine Luftaustrittsöffnung (11) aufweist,
- wobei die elektrische Maschine im Betrieb an den Lufteintrittsöffnungen (10) Luft ansaugt und die angesaugte Luft an der Luftaustrittsöffnung (11) ausstößt,
- wobei an die zur Rotationsachse (5) parallele Seite (9) des Gehäuses (1) ein Aufsatz (13) aufgesetzt ist, der die Lufteintrittsöffnungen (10) und die Luftaustrittsöffnung (11) haubenartig überdeckt, so dass die an der Luftaustrittsöffnung (11) aus dem Gehäuse (1) ausgestoßene Luft wieder den Lufteintrittsöffnungen (10) zugeführt wird,
**dadurch gekennzeichnet,**
- **dass** im Stator (2) Rohre (14) für ein flüssiges Kühlmedium (15) angeordnet sind, mittels dessen der Stator (2) im Betrieb direkt gekühlt wird, und
- **dass** zumindest einige der Rohre (14) in Richtung der Rotationsachse (5) gesehen über den Stator (2) in Richtung auf das vordere und das hintere Ende (6, 7) zu hinausragen, so dass sie im Betrieb der angesaugten, innerhalb des Gehäuses (1) strömenden Luft Wärme entziehen.

2. Elektrische Maschine nach Anspruch 1,
**dadurch gekennzeichnet,**
**dass** im Stator (2) ein Statorwicklungssystem angeordnet ist, **dass** das Statorwicklungssystem vom Stator (2) aus in Richtung der Rotationsachse (5) gesehen auf das vordere Ende (6) zu einen vorderen Wicklungskopf (20) und auf das hintere Ende (7) zu einen hinteren Wicklungskopf (21) aufweist und dass die Rohre (14) in Richtung der Rotationsachse (5) gesehen mindestens 50 %, besser mindestens 75 %, der Wicklungsköpfe (20, 21) überdecken.

3. Elektrische Maschine nach Anspruch 1 oder 2,
**dadurch gekennzeichnet,**
**dass** die Rohre (14) um die Rotationsachse (5) herum gesehen gleichmäßig verteilt angeordnet sind und dass die Rohre (14) gleich weit über den Stator (2) auf das vordere Ende (6) zu und das hintere Ende (7) zu hinausragen.

4. Elektrische Maschine nach Anspruch 1 oder 2,
**dadurch gekennzeichnet,**
**dass** die Rohre (14) um die Rotationsachse (5) herum gesehen gleichmäßig verteilt angeordnet sind und dass zumindest die im vom Aufsatz (13) abgewandten Bereich der elektrischen Maschine angeordneten Rohre (14) weniger weit über den Stator (2) auf das vordere Ende (6) zu und das hintere Ende (7) zu hinausragen als die im dem Aufsatz (13) zugewandten Bereich der elektrischen Maschine angeordneten Rohre (14).

5. Elektrische Maschine nach einem der Ansprüche 1 bis 4,
**dadurch gekennzeichnet,**
**dass** die Rohre (14) in denjenigen Bereichen, in denen sie über den Stator (2) auf das vordere Ende (6) zu und das hintere Ende (7) zu hinausragen, von der angesaugten, innerhalb des Gehäuses (1) strömenden Luft umströmt werden.

6. Elektrische Maschine nach Anspruch 5,
**dadurch gekennzeichnet,**
**dass** an den Rohren (14) in denjenigen Bereichen, in denen sie über den Stator (2) auf das vordere Ende (6) zu und das hintere Ende (7) zu hinausragen, von den Rohren (14) abstehende Kühlrippen (17) angeordnet sind.

7. Elektrische Maschine nach einem der Ansprüche 1 bis 6,
**dadurch gekennzeichnet,**
**dass** an den Rohren (14) Kühlkörper (18) angeordnet sind, die sich in Richtung der Rotationsachse (5) gesehen über die Rohre (14) hinaus zu den Enden (6, 7) des Gehäuses (1) hin erstrecken.

8. Elektrische Maschine nach einem der Ansprüche 1 bis 6,
**dadurch gekennzeichnet,**
**dass** die Rohre (14) an ihren axialen Enden über eine jeweilige Ringsammelleitung (19) miteinander verbunden sind.

9. Elektrische Maschine nach Anspruch 8,
**dadurch gekennzeichnet,**
**dass** an den Ringsammelleitungen (19) Kühlkörper (18) angeordnet sind, die sich in Richtung der Rotationsachse (5) gesehen über die Ringsammelleitungen (19) hinaus zu den Enden (6, 7) des Gehäuses (1) hin erstrecken.

10. Elektrische Maschine nach einem der obigen Ansprüche,
**dadurch gekennzeichnet,**
- **dass** der Rotor (4) mindestens einen sich in Richtung der Rotationsachse (5) erstreckenden Längskühlluftkanal (4a) aufweist, von dem in Richtung der Rotationsachse (5) gesehen an vorbestimmten Axialpositionen sich radial zur Rotationsachse (5) erstreckende rotorseitige Querkühlluftkanäle (4b) nach radial außen abzweigen,
- **dass** der Stator (2) in Richtung der Rotationsachse (5) zwischen den vorbestimmten Axialpositionen gesehen jeweils einen Statorabschnitt (2a) und an den vorbestimmten Axialpositionen sich radial zur Rotationsachse (5) erstreckende statorseitige Querkühlluftkanäle (2b) aufweist und
- **dass** die im Betrieb an den Lufteintrittsöffnungen (10) angesaugte Luft innerhalb des Gehäuses (1) zumindest teilweise in Richtung der Rotationsachse (5) in den mindestens einen Längskühlluftkanal (4a) einströmt und sodann durch die rotorseitigen Querkühlluftkanäle (4b) und die statorseitigen Querkühlluftkanäle (2b) nach radial außen strömt.

## Claims

1. Electric machine,
- wherein the electric machine has a housing (1), in which a stator (2) is arranged and in which a rotor (4) is rotatably mounted about an axis of rotation (5),
- wherein the housing (1), viewed in the direction of the axis of rotation (5), extends from a front end (6) to a rear end (7),
- wherein the housing (1) has either an air inlet opening (10) in the vicinity of the front end (6) and an air outlet opening (11) in the vicinity of the rear end (7) or an air inlet opening (10) in the vicinity of the front end (6) and the rear end (7) respectively and an air outlet opening (11) on a side (9) parallel to the axis of rotation (5) therebetween,
- wherein the electric machine draws in air at the air inlet openings (10) and expels the drawn-in air at the air outlet opening (11) during operation,
- wherein a cap (13) is positioned on the side (9) of the housing (1) parallel to the axis of rotation (5), said cap covering the air inlet openings (10) and the air outlet opening (11) in the manner of a hood, such that the air expelled from the housing (1) at the air outlet opening (11) is fed back to the air inlet openings (10),
**characterised in that**
- tubes (14) for a liquid cooling medium (15) are arranged in the stator (2), by means of which the stator (2) is directly cooled during operation, and
- at least some of the tubes (14), viewed in the direction of the axis of rotation (5), project above the stator (2) in the direction towards the front and the rear end (6, 7), so that they extract heat from the drawn-in air flowing inside the housing (1) during operation.

2. Electric machine according to claim 1,
**characterised in that**
a stator winding system is arranged in the stator (2), the stator winding system, viewed in the direction of the axis of rotation (5) from the stator (2), has a front winding head (20) towards the front end (6) and a rear winding head (21) towards the rear end (7) and the tubes (14), viewed in the direction of the axis of rotation (5), cover at least 50 %, preferably at least 75 % of the winding heads (20, 21).

3. Electric machine according to claim 1 or 2,
**characterised in that**
the tubes (14), viewed about the axis of rotation (5), are arranged so as to be evenly distributed and the tubes (14) project equally far over the stator (2) towards the front end (6) and towards the rear end (7).

4. Electric machine according to claim 1 or 2,
**characterised in that**
the tubes (14), viewed about the axis of rotation (5), are arranged so as to be evenly distributed and at least the tubes (14) arranged in the area of the electric machine facing away from the cap (13) project less far over the stator (2) towards the front end (6) and towards the rear end (7) than the tubes (14) arranged in the area of the electric machine facing the cap (13).

5. Electric machine according to one of claims 1 to 4,
**characterised in that**
the drawn-in air flowing inside the housing (1) flows around the tubes (14) in those areas in which said tubes project over the stator (2) towards the front end (6) and towards the rear end (7).

6. Electric machine according to claim 5,
**characterised in that**
cooling ribs (17) protruding from the tubes (14) are arranged on the tubes (14) in those areas in which said tubes project over the stator (2) towards the front end (6) and towards the rear end (7).

7. Electric machine according to one of claims 1 to 6,
**characterised in that**
heat sinks (18) which, viewed in the direction of the axis of rotation (5), extend beyond the tubes (14) towards the ends (6, 7) of the housing (1), are arranged on the tubes (14).

8. Electric machine according to one of claims 1 to 6,
**characterised in that**
the tubes (14) are connected to one another at their axial ends, in each case via a ring bus (19).

9. Electric machine according to claim 8,
**characterised in that**
heat sinks (18) which, viewed in the direction of the axis of rotation (5), extend beyond the ring buses (19) towards the ends (6, 7) of the housing (1), are arranged on the ring buses (19).

10. Electric machine according to one of the preceding claims,
**characterised in that**
- the rotor (4) has at least one longitudinal cool-air channel (4a) extending in the direction of the axis of rotation (5), from which rotor-side transverse cool-air channels (4b) extending radially with respect to the axis of rotation (5), viewed in the direction of the axis of rotation (5), branch off radially outwards at predetermined axial positions,
- the stator (2), viewed in the direction of the axis of rotation (5) between the predetermined axial positions, has a stator section (2a) and stator-side transverse cool-air channels (2b) extending radially with respect to the axis of rotation (5) at the predetermined axial positions and
- the air drawn in at the air inlet openings (10) during operation within the housing (1) flows at least partially in the direction of the axis of rotation (5) into the longitudinal cool-air channel (4a) and then flows radially outwards through the rotor-side transverse cool-air channels (4b) and the stator-side transverse cool-air channels (2b).

## Revendications

1. Machine électrique,
- dans laquelle la machine électrique a une carcasse (1), dans laquelle un stator (2) est disposé et dans laquelle un rotor (4) est monté tournant autour d'un axe (5) de rotation,
- dans laquelle la carcasse (1) s'étend, considéré dans la direction de l'axe (5) de rotation, d'une extrémité (6) avant à une extrémité (7) arrière,
- dans laquelle la carcasse (1) a, soit à proximité de l'extrémité (6) avant, une ouverture (10) d'entrée d'air, et, à proximité de l'extrémité (7) arrière, une ouverture (11) de sortie d'air, soit à proximité de l'extrémité (6) avant et de l'extrémité (7) arrière, respectivement une ouverture (10) d'entrée d'air et entre elles, sur un côté (9) parallèle à l'axe (5) de rotation, une ouverture (11) de sortie d'air,
- dans laquelle la machine électrique aspire en fonctionnement de l'air aux ouvertures (10) d'entrée d'air et refoule l'air aspiré à l'ouverture (11) de sortie d'air,
- dans laquelle il est mis, sur le côté (9) parallèle à l'axe (5) de rotation de la carcasse (1), une coiffe (13), qui recouvre les ouvertures (10) d'entrée d'air et l'ouverture (11) de sortie d'air, de manière à ce que l'air refoulé de la carcasse (1) à l'ouverture (11) de sortie d'air soit retourné aux ouvertures (10) d'entrée d'air, **caractérisée**
- **en ce que**, dans le stator (2), sont disposés des tuyaux (14) pour un fluide (15) de refroidissement liquide, au moyen duquel le stator (2) est refroidi directement en fonctionnement, et
- **en ce qu'**au moins certains des tuyaux (14) dépassent, considéré dans la direction de l'axe (5) de rotation, du stator (2) en direction de l'extrémité (6) avant et de l'extrémité (7) arrière, de manière à ce qu'ils retirent en fonctionnement de la chaleur de l'air aspiré passant dans la carcasse (1).

2. Machine électrique suivant la revendication 1,
**caractérisée**
**en ce que**, dans le stator (2), est disposé un système d'enroulement statorique, en ce que le système d'enroulement statorique a, considéré dans la direction de l'axe (5) de rotation, vers l'extrémité (6) avant, une tête (20) d'enroulement avant et, vers l'extrémité (7) arrière, une tête (21) d'enroulement arrière et en ce que les tuyaux (14) recouvrent, considéré dans la direction de l'axe (5) de rotation, au moins 50 % et mieux au moins 75 % des têtes (20, 21) d'enroulement.

3. Machine électrique suivant la revendication 1 ou 2,
**caractérisée**
**en ce que** les tuyaux (14) sont répartis uniformément, considéré autour de l'axe (5) de rotation, et en ce que les tuyaux (14) dépassent de la même façon du stator (2) vers l'extrémité (6) avant et vers l'extrémité (7) arrière.

4. Machine électrique suivant la revendication 1 ou 2,
**caractérisée**
**en ce que** les tuyaux (14) sont répartis uniformément, considéré autour de l'axe (5) de rotation, et en ce qu'au moins les tuyaux (14) disposés dans la partie, éloignée de la coiffe (13), de la machine électrique dépassent moins du stator (2) vers l'extrémité (6) avant et vers l'extrémité (7) arrière que les tuyaux (14) disposés dans la partie, tournée vers la coiffe (13), de la machine électrique.

5. Machine électrique suivant l'une des revendications 1 à 4,
**caractérisée**
**en ce que** l'air aspiré passant à l'intérieur de la carcasse (1) passe autour des tuyaux (14) dans les parties dans lesquelles ils dépassent du stator (2) vers l'extrémité (6) avant et vers l'extrémité (7) arrière.

6. Machine électrique suivant la revendication 5,
**caractérisée**
**en ce que**, sur les tuyaux (14), dans les parties dans lesquelles ils dépassent du stator (2) vers l'extrémité (6) avant et vers l'extrémité (7) arrière, sont disposées des ailettes (17) de refroidissement en saillie du tuyau (14).

7. Machine électrique suivant l'une des revendications 1 à 6,
**caractérisée**
**en ce que**, sur les tuyaux (14), sont disposés des dissipateurs (18) de chaleur, qui, considéré dans la direction de l'axe (5) de rotation, s'étendent au-delà des tuyaux (14) vers les extrémités (6, 7) de la carcasse (1).

8. Machine électrique suivant l'une des revendications 1 à 6,
**caractérisée**
**en ce que** les tuyaux (14) communiquent entre eux à leur extrémité axiale par un conduit (19) conducteur annulaire respectif.

9. Machine électrique suivant la revendication 8,
**caractérisée**
**en ce que**, sur les conduits (19) conducteurs annulaires sont disposés des dissipateurs (18) de chaleur, qui, considéré dans la direction de l'axe (5) de rotation, s'étendent au-delà des conduits (19) conducteurs annulaires jusqu'aux extrémités (6, 7) de la carcasse (1).

10. Machine électrique suivant l'une des revendications précédentes,
**caractérisée**
- **en ce que** le rotor (4) a au moins un canal (4a) longitudinal pour de l'air de refroidissement s'étendant dans la direction de l'axe (5) de rotation et duquel bifurquent radialement vers l'extérieur, considéré dans la direction de l'axe (5) de rotation, en des positions axiales déterminées à l'avance, des canaux (4b) d'air de refroidissement transversaux du côté du rotor s'étendant radialement à l'axe (5) de rotation,
- **en ce que** le stator (2) a, considéré dans la direction de l'axe (5) de rotation entre les positions axiales déterminées à l'avance, respectivement une partie (2a) de stator et en les positions axiales déterminées à l'avance des canaux (2b) d'air de refroidissement transversaux du côté du stator s'étendant radialement par rapport à l'axe (5) de rotation et
- **en ce que** l'air aspiré en fonctionnement aux ouvertures (10) d'entrée d'air entre à l'intérieur de la carcasse (1) au moins en partie dans la direction de l'axe (5) de rotation dans le au moins un canal (4) longitudinal pour de l'air de refroidissement et ensuite s'écoule radialement vers l'extérieur par des canaux (4b) transversaux pour de l'air de refroidissement du côté du rotor et par les canaux (2b) transversaux pour de l'air de refroidissement du côté du stator.
